# EUROPEAN PATENT APPLICATION

(11) **EP 3 023 821 A1**
(43) Date of publication of application: **25.05.2016**
(21) Application number: 15195271.0
(22) Date of filing: 19.11.2015
(51) Int. Cl.: G02B 5/30

(54) **WIRE GRID POLARIZER, DISPLAY DEVICE INCLUDING THE SAME AND METHOD FOR FABRICATING THE SAME**

(30) Priority: 20.11.2014 KR 20140162757
(71) Applicant: Samsung Display Co., Ltd., Gyeonggi-do (KR)
(72) Inventor: SON, Jung-Ha, 1905-1101 Seoul (KR); YEO, Yun-Jong, 3-1103 Seoul (KR); LEE, Joo-Hyung, 205-504 Seongnam-si, Gyeonggi-do (KR)
(74) Representative: Dr. Weitzel & Partner

(57) **Abstract**

According to an embodiment, there is provided a wire grid polarizer comprising a substrate, a plurality of parallel conductive wire patterns which is located to protrude on the substrate, and an oxidation prevention layer which is located along an upper surface of the conductive wire patterns, wherein the oxidation prevention layer is formed of a compound including aluminum and fluorine.

## Description

### TECHNICAL FIELD

The present application relates to a wire grid polarizer, a display device including the same, and a method for fabricating the same.

### BACKGROUND

A parallel conductive wire array which arranges parallel conductive wires in order to polarize a specific polarized light component in an electromagnetic wave is generally referred to as a wire grid.

A wire grid structure which has a cycle shorter than a wavelength of corresponding light has a polarization characteristic which reflects a polarized light component of non-polarized incident light in a wire direction and transmits a polarized light component which is perpendicular to the wire direction. This has an advantage which reuses the reflected polarized light component as compared with an absorbing polarizer.

However, since the wire grid structure is formed of a conductive material, when the conductive material is naturally oxidized, an oxidized layer is formed on a surface of the conductive material and the oxidized layer generally has a high refractive index and as the refractive index is increased, transmittance and an extinction ratio in a range of a visible ray are lowered.

### SUMMARY

Embodiments have been made in an effort to provide a wire grid polarizer having an excellent optical characteristic, a display device including the same, and a method for fabricating the same.

Technical features of the inventive concept are not limited to the above-mentioned technical features, and other technical features, which are not mentioned above, can be clearly understood by those skilled in the art from the following descriptions.

According to an exemplary embodiment, there is provided a wire grid polarizer, comprising a substrate, a plurality of parallel conductive wire patterns which is located to protrude on the substrate, and an oxidation prevention layer which is located along an upper surface of the conductive wire patterns, wherein the oxidation prevention layer is formed of a compound including aluminum and fluorine.

In another embodiment, there is provided a display panel comprising a substrate, a plurality of conductive wire patterns which is located to protrude on the substrate, an oxidation prevention layer located on the conductive wire patterns, a gate line which is located on the oxidation prevention layer and extends in a first direction, a data line which is insulated from the gate line and extends in a second direction, a thin film transistor which is electrically connected to the gate line and the data line, and a pixel electrode which is electrically connected to the thin film transistor, wherein the oxidation prevention layer is formed of a compound including aluminum and fluorine.

In another embodiment, there is provided a method of fabricating a wire grid polarizer, comprising forming a conductive wire pattern layer on a substrate, forming a conductive wire pattern by patterning the conductive wire pattern layer, and forming an oxidation prevention layer in-situ after the forming of the conductive wire pattern.

The embodiments have at least the following effects.

A wire grid polarizer having excellent optical characteristics may be provided.

The effects according to the inventive concept are not limited to the contents exemplified above, and various effects are additionally included in the present specification.

### BRIEF DESCRIPTION OF THE DRAWINGS

The above and other features of the inventive concept will become more apparent by describing in detail embodiments thereof with reference to the attached drawings in which:
FIG. 1 is a cross-sectional view of a wire grid polarizer according to an embodiment;
FIG. 2 is a cross-sectional view of a wire grid polarizer according to another embodiment;
FIG. 3 is a cross-sectional view of a wire grid polarizer according to another embodiment;
FIG. 4 is a cross-sectional view of a wire grid polarizer according to another embodiment;
FIG. 5 is a schematic cross-sectional view of a lower panel of a display device according to an embodiment;
FIG. 6 is a schematic cross-sectional view of a lower panel of a display device according to another embodiment; and
FIGS. 7, 8, 9, 10, 11, and 12 are cross-sectional views of fabricating processes of a color filter integrated polarizer according to an embodiment.

### DETAILED DESCRIPTION OF THE EMBODIMENTS

Features of the inventive concept and methods of accomplishing the same may be understood more readily by reference to the following detailed description of embodiments and the accompanying drawings. The inventive concept may, however, be embodied in many different forms and should not be construed as being limited to the embodiments set forth herein. Rather, these embodiments are provided so that this disclosure will be thorough and complete and will fully convey the concept of the inventive concept to those skilled in the art, and the inventive concept will only be defined by the appended claims. Like reference numerals refer to like elements throughout the specification.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on", "directly connected to" or "directly coupled to" another element or layer, there are no intervening elements or layers present. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

Spatially relative terms, such as "beneath", "below", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Embodiments are described herein with reference to cross-section illustrations that are schematic illustrations of idealized embodiments (and intermediate structures). As such, variations from the shapes of the illustrations as a result, for example, of manufacturing techniques and/or tolerances, are to be expected. Thus, these embodiments should not be construed as limited to the particular shapes of regions illustrated herein but are to include deviations in shapes that result, for example, from manufacturing. For example, a region illustrated as a rectangle may have rounded or curved features and/or a gradient at its edges rather than a binary change from the region. Thus, the regions illustrated in the figures are schematic in nature and their shapes are not intended to illustrate the actual shape of a region of a device and are not intended to limit the scope of the inventive concept.

Unless otherwise defined, all terms (including technical and scientific terms) used herein have the same meaning as commonly understood by one of ordinary skill in the art to which the inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

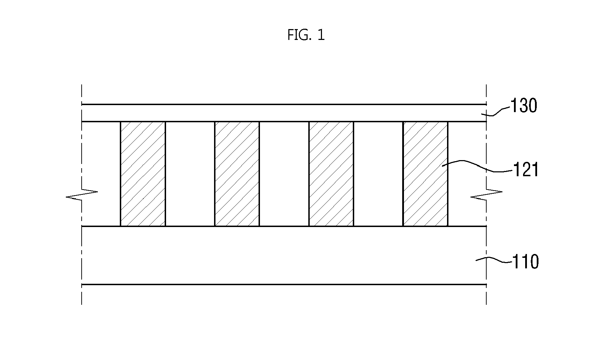

FIG. 1 is a cross-sectional view of a wire grid polarizer according to an embodiment.

Referring to FIG. 1, a wire grid polarizer according to an embodiment includes a substrate 110, a plurality of parallel conductive wire patterns 121 which is formed to protrude on the substrate 110, and an oxidation prevention layer 130 formed on the conductive wire patterns 121.

If the substrate 110 transmits visible rays, a material thereof may be appropriately selected in accordance with a purpose and a process. For example, various polymers such as glass, quartz, acryl, triacetylcellulose (TAC), cyclic olefin copolymer (COP), a cyclic olefin polymer (COC), polycarbonate (PC), polyethylene naphthalate (PET), or polyether sulfone (PES) may be used therefor, but the material is not limited thereto. The substrate 110 may be formed of an optical film base member having a predetermined degree of flexibility.

The conductive wire patterns 121 may be arranged on the substrate 110 to be parallel to each other with a predetermined cycle or period, i.e., distance between the centers of adjacent conductive wires of the conductive wire patterns 121. When the cycle of the conductive wire pattern 121 is short as compared with a wavelength of incident light, a polarization extinction ratio may be high. However, the shorter the period, the more difficult to fabricate the wire grid polarizer. A range of the visible ray, i.e., visible light, is generally 380 nanometers (nm) to 780 nm and in order to make the wire grid polarizer have a high extinction ratio for three primary colors of a light spectrum of red, green, and blue (R, G, B), only when the period is at least 200 nm or shorter, the polarization characteristic may be expected. However, in order to exhibit polarization performance which is equal to or better than the existing polarizer, the period may be 120 nm or shorter.

If a material for the conductive wire pattern 121 is a conductive material, the material may be used without any limitations. In one embodiment, the conductive wire pattern 120 may be formed of a metal material, and more specifically, one metal selected from a group consisting of aluminum (Al), chrome (Cr), silver (Ag), copper (Cu), nickel (Ni), cobalt (Co), and molybdenum (Mo) or an alloy thereof, but is not limited thereto.

The width of the conductive wire pattern 121 may be in the range of 10 nm to 200 nm within a range where the polarization performance is exhibited, but is not limited thereto. Further, a thickness of the conductive wire pattern 121 may be in a range of 10 nm to 500 nm, but is not limited thereto.

The oxidation prevention layer 130 may be formed along upper surfaces of the conductive wire patterns 121. By doing this, a space between the conductive wire patterns 121 may be secured. Further, the oxidation prevention layer 130 blocks contact with the outside, so that the conductive wire pattern 121 is prevented from reacting with oxygen or moisture in the atmosphere and becoming oxidized.

The oxidation is prevented by the oxidation prevention layer 130 on a surface of the conductive wire pattern 121, so that the space between the conductive wire patterns 121 is not intruded, thereby providing relatively high transmittance and extinction ratio.

The oxidation prevention layer 130 may be a compound including aluminum and fluorine as elements. In one example, the oxidation prevention layer 130 may further include elements which may be generated during the process, such as oxide, carbon, and nitrogen, in addition to aluminum and fluorine.

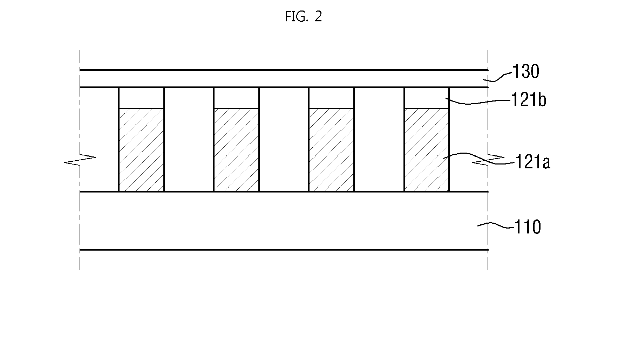

FIG. 2 is a cross-sectional view of a wire grid polarizer according to another embodiment.

Referring to FIG. 2, a wire grid polarizer according to another embodiment includes a substrate 110, a plurality of first parallel conductive wire patterns 121a and a plurality of second parallel conductive wire patterns 121b which protrudes on the substrate 110 to be sequentially formed, and an oxidation prevention layer 130 which is formed on the second conductive wire patterns 121b.

If materials for the first conductive wire patterns 121a and the second conductive wire patterns 121b are conductive materials, the materials may be used without any limitations. In one embodiment, the conductive wire patterns may be formed of a metal material, and more specifically, one metal selected from a group consisting of aluminum (Al), chrome (Cr), silver (Ag), copper (Cu), nickel (Ni), cobalt (Co), and molybdenum (Mo), or an alloy thereof, but are not limited thereto.

In one example, the first conductive wire pattern 121a may be configured by, e.g., is formed by and/or includes, aluminum and the second conductive wire pattern 121b may be configured by titanium or molybdenum, but the conductive wire patterns are not limited thereto. When the first conductive wire pattern 121 a is configured by aluminum, hillock, sometimes called small hills or bumps, is generated in accordance with a process temperature in a subsequent process, so that an upper surface is not uniform, which may lower an optical characteristic of a product. In order to prevent the hillock, the second conductive wire pattern 121b which is configured by titanium or molybdenum is formed on the first conductive wire pattern 121a, so that the hillock which may be generated during the process may be prevented.

Other configurations of FIG. 2 are the same as the configurations of FIG. 1 or correspond to the configurations of FIG. 1, so that a redundant description will be omitted.

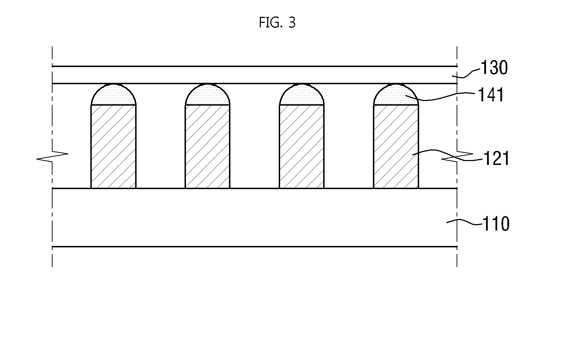

FIG. 3 is a cross-sectional view of a wire grid polarizer according to another embodiment.

Referring to FIG. 3, a wire grid polarizer according to another embodiment includes a substrate 110, a plurality of parallel conductive wire patterns 121 which is formed to protrude on the substrate 110, a hard mask 141 which is located on the conductive wire patterns 121, and an oxidation prevention layer 130 which is formed on the conductive wire patterns 121.

The hard mask 141 may be formed on the conductive wire pattern 121. A width of the hard mask 141 may be smaller than or equal to a width of the conductive wire pattern 121 and a thickness of the hard mask 141 may be in a range of 10 nm to 300 nm, but the width and the thickness are not limited thereto.

In FIG. 3, a vertical cross-sectional shape of the hard mask 141 is illustrated to be a semi-circular shape, but is not limited thereto. The vertical cross-sectional shape of the hard mask 141 may be a shape such as a polygon, semicircle, a semi ellipse, a quadrangle, a triangle, or a trapezoid, but is not limited thereto and may be formed by a composite shape of various shapes for every thickness section.

The hard mask 141 may be a transparent material. A conductive metal material may be used or a non-conductive material may be used. Examples of the non-conductive materials may include polymer, oxide, or nitride and a more specific example may include silicon oxide or silicon nitride but the non-conductive materials are not limited thereto.

Other configurations of FIG. 3 are the same as the configurations of FIG. 1 or correspond to the configurations of FIG. 1, so that a redundant description will be omitted.

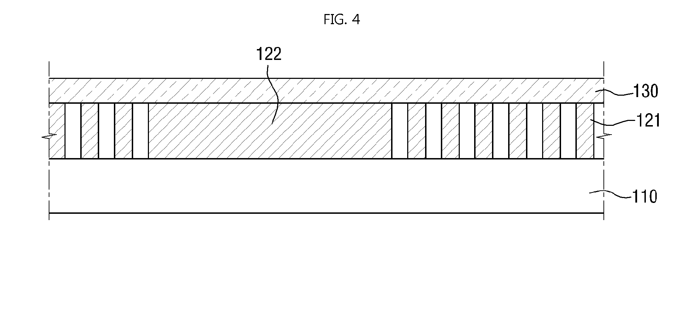

FIG. 4 is a cross-sectional view of a wire grid polarizer according to another embodiment.

Referring to FIG. 4, a wire grid polarizer according to another embodiment includes a substrate 110, a plurality of parallel conductive wire patterns 121 which is formed to protrude on the substrate 110, a reflective layer 122 formed between the conductive wire patterns 121 on the substrate 110, and an oxidation prevention layer 130 which is formed on the conductive wire patterns 121 and the reflective layer 122.

The reflective layer 122 may be a region of the conductive wire pattern 121 which is not patterned and may be formed in a region corresponding to a non-opening of a display device which includes the wire grid polarizer. For example, the reflective layer 122 may be formed in a wiring region or a transistor region, but the region where the reflective layer is formed is not limited thereto.

Other configurations of FIG. 4 are the same as the configurations of FIG. 1 or correspond to the configurations of FIG. 1, so that a redundant description will be omitted.

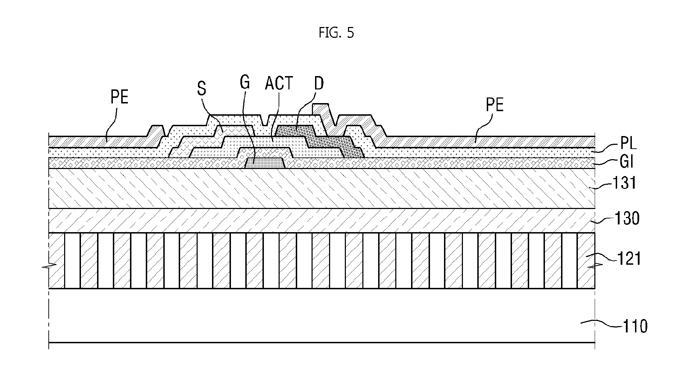

FIG. 5 is a schematic cross-sectional view of a lower panel of a display device according to an embodiment.

Referring to FIG. 5, a lower panel of a display device according to an embodiment may be a TFT panel and include a substrate 110, a plurality of parallel conductive wire patterns 121 which is formed to protrude on the substrate 110, an oxidation prevention layer 130 formed on the conductive wire patterns 121, and a protection layer 131 formed on the oxidation prevention layer 130. A gate electrode G is located on the protection layer 131, a gate insulating layer GI is located on the gate electrode G and the protection layer 131, and a semiconductor layer ACT is located in a region which at least partially overlaps the gate electrode G on the gate insulating layer GI. A source electrode S and a drain electrode D are spaced apart from each other on the semiconductor layer ACT. A passivation layer PL is located on the gate insulating layer GI, the source electrode S, the semiconductor layer ACT, and the drain electrode D. A pixel electrode PE is located via a contact hole through which at least a part of the drain electrode D is exposed, on the passivation layer PL to be electrically connected to the drain electrode D.

The protection layer 131 may be formed to non-conductively process an upper surface of the wire grid polarizer and planarize a surface thereof. As a material used for the protection layer 131, any of non-conductive and transparent materials may be used.

For example, the material may be one or more selected from a group consisting of SiOₓ, SiNₓ, and SiOC, but is not limited thereto. In one example, the material may be formed of a structure in which a SiOC layer is sequentially laminated on a SiOₓ layer. In this case, under the same chamber and the same condition, the deposition may be performed only by changing raw material gas and a depositing speed of the SiOC layer is relatively high, which may be advantageous in view of process efficiency.

In another example, a transparent resin may be used. In this case, the protection layer 131 may be formed by photo-curing and/or thermal curing after performing spin coating, thereby improving the process efficiency.

In some cases, the protection layer 131 is not separately formed, but the oxidation prevention layer 130 may serve as the protection layer 131. In this case, for the purpose of performing the planarization, a thickness of the oxidation prevention layer 130 is formed to be relatively thick and a separate planarization process may be additionally performed.

The display device may further include a liquid crystal panel which is located below the lower substrate and includes a backlight unit which emits light, the lower substrate, a liquid crystal layer and an upper substrate and an upper polarizing plate which is located above the liquid crystal panel.

In this case, transmissive axes of the upper polarizing plate and the wire grid polarizer are perpendicular or parallel to each other. In some cases, the upper polarizing plate may be configured by a wire grid polarizer and may be a PVA based polarizer film of the related art. Further, in some cases, the upper polarizing plate may be omitted.

Even though the backlight unit is not specifically illustrated, for example, the backlight unit may further include a light guide plate, a light source unit, a reflecting member, and an optical sheet.

The light guide plate (LGP) is a portion which changes a path of light generated from the light source unit to be directed to the liquid crystal layer and may include a light incident surface onto which light generated from the light source unit is incident and a light emitting surface which faces the liquid crystal layer. The light guide plate may be formed of a material having a constant refractive index such as a polymethyl metacrylate (PMMA) material or a polycarbonate (PC) material which is one of light transmissive materials, but the material is not limited thereto.

The light which is incident on one side or both sides of the light guide plate which is formed of the above-mentioned material has an angle which is within a critical angle of the light guide plate so as to be incident into the light guide plate. An angle of light which is incident onto an upper surface or a lower surface of the light guide plate is out of the critical angle, so that the light is not emitted outside the light guide plate but is uniformly transmitted into the light guide plate.

A scattering pattern may be formed on any one of the upper surface and the lower surface of the light guide plate, for example, on the lower surface which is opposite to the light emission surface so that the guided light is upwardly emitted. That is, the scattering pattern may be printed on one surface of the light guide plate with ink so that the light which is transmitted in the light guide plate is upwardly emitted. Such a scattering pattern may be formed to be printed with ink but is not limited thereto and minute grooves or protrusions may be formed on the light guide plate and various modifications may be allowed.

A reflective member may be further provided between the light guide plate and a bottom of a lower accommodating member. The reflective member reflects light which is emitted to a lower surface of the light guide plate, that is, an opposite surface which is opposite to the light emitting surface again to supply the light to the light guide plate. The reflective member may be formed as a film, but is not limited thereto.

The light source unit may be disposed so as to face the light incident surface of the light guide plate. The number of light source units may be appropriately varied as necessary. For example, one light source unit may be provided only on one side of the light guide plate and three or more light source units may be provided so as to correspond to three sides or more of four sides of the light guide plate. Further, a plurality of light source units may be provided so as to correspond to any one of sides of the light guide plate. As described above, a side light method which is a method of positioning a light source on a side of the light guide plate has been described as an example, but a direct type method or a surface type light source method may be additionally provided depending on a configuration of the backlight.

The light source may be a white LED which emits a white light component or a plurality of LEDs which emits red (R), green (G), and blue (B) light components, respectively. When the plurality of light sources is implemented as LEDs which emit red (R), green (G), and blue (B) light components, the LEDs are turned on at one time to implement white light by color mixture.

The upper substrate may be a color filter (CF) substrate. For example, the upper substrate may include a black matrix underneath a base member formed of a transparent insulating material such as glass or plastic to prevent light leakage and red, green, and blue color filters, and a common electrode which is an electric field generating electrode formed of a transparent conductive oxide such as ITO or IZO.

The light crystal layer serves to rotate a polarization axis of the incident light and is oriented in a predetermined direction to be located between the upper substrate and the lower substrate. The liquid crystal layer may have a twisted nematic (TN) mode having a positive dielectric anisotropy, a vertical alignment (VA) mode or a horizontal alignment (IPS or FFS) mode, but is not limited thereto.

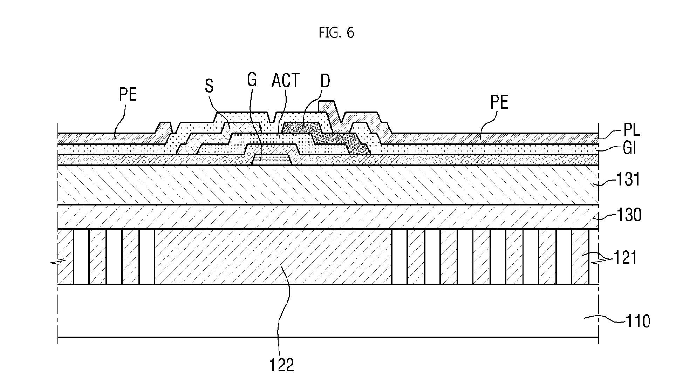

FIG. 6 is a schematic cross-sectional view of a lower panel of a display device according to another embodiment.

Referring to FIG. 6, a lower panel of a display device according to another embodiment may be a TFT panel and include a substrate 110, a plurality of parallel conductive wire patterns 121 which is formed to protrude on the substrate 110, a reflective layer 122 formed between the conductive wire patterns 121 on the substrate 110, an oxidation prevention layer 130 formed on the conductive wire patterns 121 and the reflective layer 122, and a protection layer 131 formed on the oxidation prevention layer 130. A gate electrode G is located on the protection layer 131, a gate insulating layer GI is located on the gate electrode G and the protection layer 131, and a semiconductor layer ACT is located in a region which at least partially overlaps the gate electrode G on the gate insulating layer GI. A source electrode S and a drain electrode D are spaced apart from each other on the semiconductor layer ACT. A passivation layer PL is located on the gate insulating layer GI, the source electrode S, the semiconductor layer ACT, and the drain electrode D. A pixel electrode PE is located via a contact hole through which at least a part of the drain electrode D is exposed, on the passivation layer PL to be electrically connected to the drain electrode D.

A region where the TFT including the gate electrode G, the semiconductor layer ACT, the source electrode S, and the drain electrode D is positioned is a region where light is not transmitted and also referred to as a non-opening. Therefore, in a position corresponding to the non-opening, the reflective layer 122 in which the conductive wire pattern 121 of the wire grid polarizer is not formed may be formed. In this case, a metallic material having high reflectance reflects light which is incident onto the non-opening to be reused in the opening, thereby improving brightness of the display device.

Other configurations of FIG. 6 are the same as the configurations of FIG. 5 or correspond to the configurations of FIG. 5, so that a redundant description will be omitted.

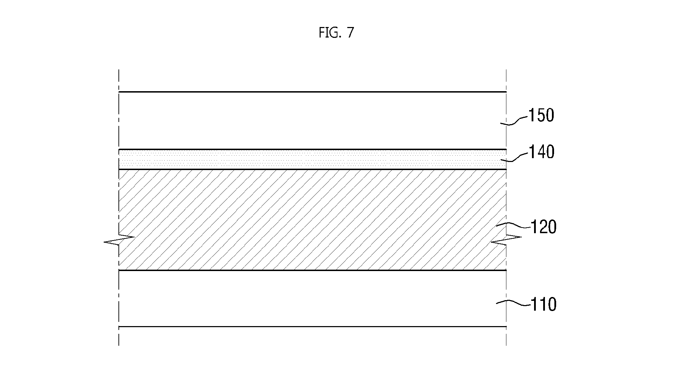

FIGS. 7 to 12 are cross-sectional views of fabricating processes of a color-filter integrated wire grid polarizer according to an embodiment.

First, referring to FIG. 7, a conductive wire pattern layer 120, a hard mask layer 140, and an imprint resin layer 150 are sequentially laminated on a substrate 110.

If the substrate 110 transmits visible rays, a material thereof may be appropriately selected in accordance with a purpose and a process. For example, various polymers such as glass, quartz, acryl, triacetylcellulose (TAC), cyclic olefin copolymer (COP), a cyclic olefin polymer (COC), polycarbonate (PC), polyethylene naphthalate (PET), polyimide (PI), polyethylene naphthalate (PEN), polyether sulfone (PES), and polyarylate (PAR) may be used, but the material is not limited thereto. The substrate 110 may be formed of an optical film base member having a predetermined degree of flexibility.

Even though not illustrated, in some cases, a buffer layer may be further provided between the substrate 110 and the conductive wire pattern 120.

As a method of forming the conductive wire pattern layer 120 and the hard mask layer 140, a general sputtering method, a chemical vapor deposition method, or an evaporation method may be used, but the method is not limited thereto.

When a material of the conductive wire pattern layer 120 is a conductive material, the material may be used without any limitation. In one embodiment, the conductive wire pattern layer 120 may be formed of a metal material, and more specifically, one metal selected from a group consisting of aluminum (Al), chrome (Cr), silver (Ag), copper (Cu), nickel (Ni), titanium (Ti), cobalt (Co), and molybdenum (Mo), or an alloy thereof but is not limited thereto.

In some cases, the conductive wire pattern layer 120 may include two or more layers. For example, a first conductive wire pattern layer (not illustrated) may be configured by aluminum and a second conductive wire pattern layer (not illustrated) may be configured by titanium or molybdenum, but the conductive wire pattern layers are not limited thereto. When the first conductive wire pattern layer (not illustrated) is configured by aluminum, hillock is generated in accordance with a process temperature in a subsequent process, so that an upper surface is not uniform, which may lower an optical characteristic of a product. In order to prevent the hillock, the second conductive wire pattern layer (not illustrated) which is configured by titanium or molybdenum is formed on the first conductive wire pattern layer (not illustrated), so that the hillock which may be generated during the process may be prevented.

The hard mask layer 140 may be formed of a polymer, oxide, or nitride and a more specific example may include silicon oxide or silicon nitride but is not limited thereto.

The imprint resin layer 150 may be formed by applying a resin for imprinting but is not limited thereto and all available methods which are known in the art may be used.

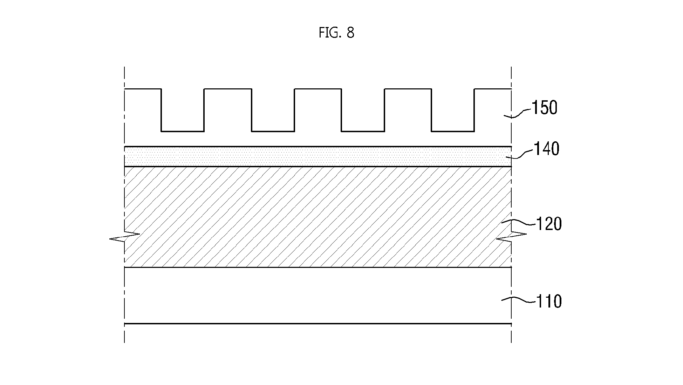

Referring to FIG. 8, the imprint resin layer 150 may be patterned.

A process of patterning the imprint resin layer 150 is performed by stamping the imprint resin layer 150 using an imprint mold (not illustrated) and curing the imprint resin layer 150, but is not limited thereto.

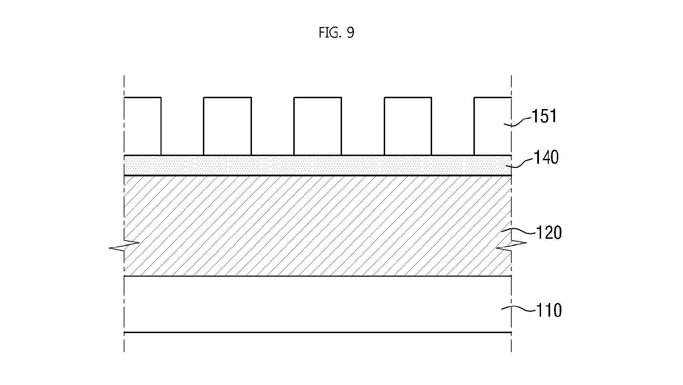

Referring to FIG. 9, an imprint pattern 151 may be formed by removing the remaining bottom of the patterned imprint resin layer 150.

More particularly, in the patterned imprint resin layer 150, the bottom which connects the patterns to each other remains on the entire surface of the hard mask layer 140. The remaining bottom is removed to form the imprint pattern 151. The removing process is not specifically limited and may be performed using a general etching process, but is not limited thereto.

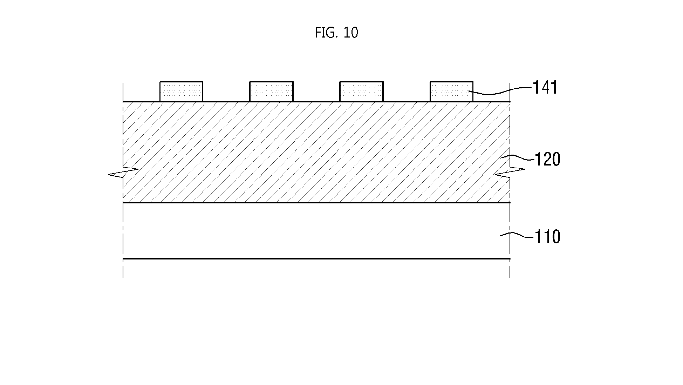

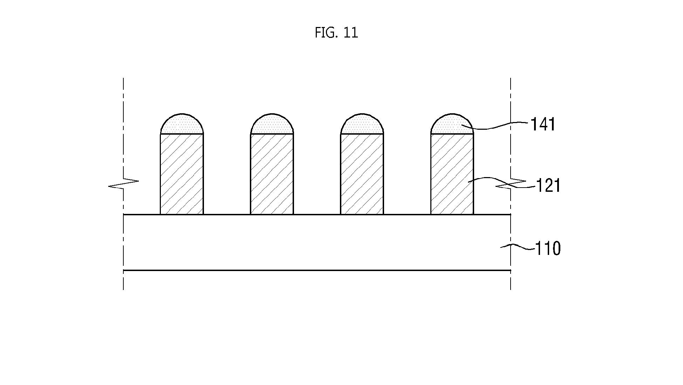

Referring to FIGS. 10 and 11, the hard mask layer 140 is patterned using the imprint pattern 151 to be a hard mask 141 and the conductive wire pattern layer 120 may be patterned using the hard mask 141 to be a conductive wire pattern 121.

Even though processes of FIG. 10 and FIG. 11 have been described while separately illustrating the processes, in some cases, the hard mask layer 140 and the conductive wire pattern layer 120 may be simultaneously patterned to form the hard mask 141 and the conductive wire pattern 121.

An upper portion of the hard mask 141 is partially etched during the patterning process of the conductive wire pattern 121, so that a vertical cross-sectional shape of the hard mask 141 may be a shape such as a polygon, a semicircle, a semi ellipse, a quadrangle, a triangle, or a trapezoid, but is not limited thereto and may be a composite shape of various shapes for every thickness section.

Even though not specifically illustrated, the hard mask 141 may be removed during the patterning process of the conductive wire pattern 121.

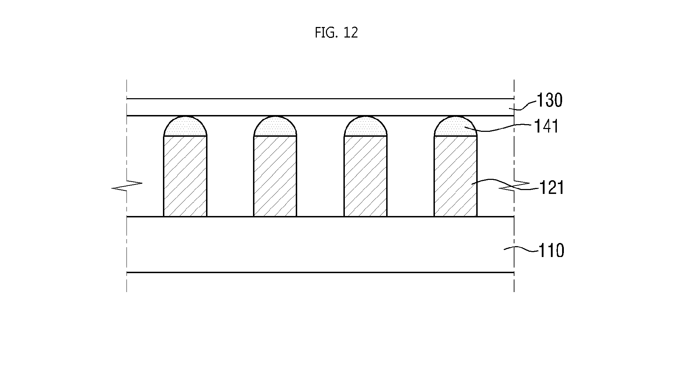

Referring to FIG. 12, in a vacuum chamber in which the conductive wire pattern 121 is etched, the oxidation prevention layer 130 may be formed through fluorinated gas plasma processing after the etching.

The conductive wire pattern 121 may be etched, for example by dry etching using Cl₂ gas. In this case, when the conductive wire pattern 121 is taken out of the vacuum chamber for a subsequent process, the conductive wire pattern 121 meets oxygen or moisture in the atmosphere, so that the conductive wire pattern 121 may be oxidized or corroded due to HCl.

The plasma processing is performed using fluorinated gas in the vacuum chamber where the etching is performed, so that the oxidation prevention layer 130 which is formed of a compound including aluminum and fluorine as elements may be formed along an upper surface of the hard mask 141.

A thickness of the oxidation prevention layer 130 may be 20 nm or smaller but when a separate protection layer is not formed, the thickness may be larger and a separate planarizing process may be further performed.

The fluorinated gas may be NF based gas, SF based gas, or CF based gas but is not limited thereto. Specific examples of the gas include NF₃, SF₆, C₄F₈, CHF₃, CH₂F₂, C₄F₈, CF₄, C₂F₆, but are not limited thereto.

In one example, a high output is applied to an upper portion and a lower portion of the chamber under NF₃/N₂ gas atmosphere in the vacuum chamber to perform the plasma processing. In this case, aluminum reacts with fluorine radical in the upper portion of the hard mask 141 to form the oxidation prevention layer 130. In this case, the oxidation prevention layer 130 may be formed of various elements remaining in the chamber, for example, a compound additionally including carbon, oxygen, or nitrogen.

The oxidation prevention layer 130 is formed along the upper surface of the hard mask 141, but may be partially invaded into the conductive wire pattern 121 in some regions. However, this is ignorable and the composition is different from the composition generated by general oxidation or corrosion.

In FIGS. 7 to 12, it is illustrated that the conductive wire pattern 121 is formed using the nano imprint method, but the pattern forming method is not limited thereto. In addition, for example, the conductive wire pattern 121 may be formed using photo resist, double patterning (DPT), or block copolymer alignment patterning.

## Claims

1. A wire grid polarizer, comprising:
a substrate (110);
a plurality of parallel conductive wire patterns (121) which is located to protrude on the substrate (110); and
an oxidation prevention layer (130) which is located along an upper surface of the conductive wire patterns (121),
wherein the oxidation prevention layer (130) is formed of a compound including aluminum and fluorine.

2. The wire grid polarizer of Claim 1, wherein the conductive wire pattern (121) includes one metal selected from a group consisting of aluminum (Al), chrome (Cr), silver (Ag), copper (Cu), nickel (Ni), cobalt (Co), and molybdenum (Mo) and an alloy thereof.

3. The wire grid polarizer of Claim 1, wherein the conductive wire pattern (121) comprises:
a first conductive wire pattern (121a) which is located on the substrate (110); and
a second conductive wire pattern (121b) which is located on the first conductive wire pattern (121a).

4. The wire grid polarizer of Claim 1, further comprising:
a hard mask (141) between the conductive wire patterns (121) and the oxidation prevention layer (130).

5. The wire grid polarizer of Claim 1, further comprising:
a reflective layer (122) which is located in a region between the conductive wire patterns (121), on the substrate (110).

6. A display panel, comprising:
a substrate (110);
a plurality of conductive wire patterns (121) which is located to protrude on the substrate (110);
an oxidation prevention layer (130) located on the conductive wire patterns (121);
a gate line which is located on the oxidation prevention layer (130) and extends in a first direction;
a data line which is insulated from the gate line and extends in a second direction;
a thin film transistor which is electrically connected to the gate line and the data line; and
a pixel electrode (PE) which is electrically connected to the thin film transistor,
wherein the oxidation prevention layer (130) is formed of a compound including aluminum and fluorine.

7. The display panel of Claim 6, further comprising:
a reflective layer which is located in a region between the conductive wire patterns (121), on the substrate (110),
wherein the conductive wire patterns (121) are located in an opening region which corresponds to the pixel electrode (PE) and the reflective layer (122) is located in a non-opening region which does not correspond to the pixel electrode (PE).

8. The display panel of Claim 6, further comprising:
a protection layer (131) on the oxidation prevention layer (130).

9. A method of fabricating a wire grid polarizer, comprising:
forming a conductive wire pattern layer (120) on a substrate (110);
forming a conductive wire pattern (121) by patterning the conductive wire pattern layer (121); and
forming an oxidation prevention layer (130) in-situ after the forming of the conductive wire pattern (121).

10. The method of Claim 9, wherein the forming of the conductive wire pattern (121) is performed in a vacuum chamber.

11. The method of Claim 9, wherein the forming of the oxidation prevention layer (130) is performed by plasma processing under a fluorinated gas atmosphere.

12. The method of Claim 9, further comprising:
after the forming of the oxidation prevention layer (130),
forming a protection layer (131) on the oxidation prevention layer (130).

13. The method of Claim 12, wherein the forming of the protection layer (131) is performed by a coating method.
